# FASCICULE DE BREVET EUROPEEN

(11) **EP 3 844 102 B1**
(45) Date de publication et mention de la délivrance du brevet: **10.09.2025**
(21) Numéro de dépôt: 19779059.5
(22) Date de dépôt: 26.08.2019
(51) Int. Cl.: C01B 3/34

(54) **PROCÉDÉ DE PRODUCTION D'UN GAZ DE SYNTHÈSE PAR TRAITEMENT D'UN FLUX GAZEUX CONTENANT DU CO2 ET UN OU PLUSIEURS HYDROCARBURES**
VERFAHREN ZUR HERSTELLUNG EINES SYNTHESEGASES DURCH BEHANDLUNG EINES GASSTROMS MIT CO2 UND EINEM ODER MEHREREN KOHLENWASSERSTOFFEN
METHOD FOR PRODUCING A SYNTHESIS GAS BY TREATING A GAS STREAM CONTAINING CO2 AND ONE OR MORE HYDROCARBONS

(30) Priorité: 28.08.2018 FR 1857709
(43) Date de publication de la demande: 07.07.2021
(73) Titulaire: Europlasma, 40110 Morcenx (FR)
(72) Inventeur: ROBERT-ARNOUIL, Jean-Paul, 33600 PESSAC (FR)
(74) Mandataire: Plasseraud IP
(86) Numéro de dépôt international: PCT/FR2019/051966
(87) Numéro de publication internationale: WO 2020/043985

(56) Documents cités:
- EP-A2- 0 157 758
- WO-A1-2008/098324
- WO-A1-2012/095213
- WO-A1-2014/038907
- WO-A1-2014/051366
- WO-A1-2017/072181
- RAMSES SNOECKX ET AL: "Plasma technology - a novel solution for CO 2 conversion?", CHEMICAL SOCIETY REVIEWS, vol. 46, no. 19, 21 August 2017 (2017-08-21), UK, pages 5805 - 5863, XP055598841, ISSN: 0306-0012, DOI: 10.1039/C6CS00066E

## Description

### ARRIERE-PLAN DE L'INVENTION

### Domaine de l'invention

La présente invention concerne le domaine général de la réduction des émissions de dioxyde de carbone (CO₂), notamment dans les flux gazeux émis par des centrales thermiques et des installations industrielles telles que des industries sidérurgiques ou des cimenteries.

Elle vise plus particulièrement un procédé de production d'un gaz de synthèse par traitement d'un flux gazeux contenant du CO₂ et un ou plusieurs hydrocarbures.

### Arrière-plan technologique

La diminution du dioxyde de carbone, principal gaz à effet de serre, constitue un des enjeux majeurs de notre société pour lutter contre le réchauffement climatique.

Toutefois, la croissance continue de la demande énergétique mondiale, notamment tirée par l'accroissement de la population et du niveau de vie moyen par habitant, ne permet pas aujourd'hui de s'affranchir des énergies fossiles.

Diverses solutions ont été adoptées ou sont à l'étude, telles que l'amélioration de l'efficacité énergétique des procédés industriels, ou encore plus récemment, le captage et le stockage du CO₂ dans le sol.

Une nouvelle approche vise à considérer le dioxyde de carbone non plus comme une contrainte qu'il faut gérer, mais comme une matière première susceptible d'être valorisée, c'est-à-dire transformée ou convertie pour générer un produit valorisable.

De nombreuses études ont ainsi été menées pour transformer le dioxyde de carbone en d'autres espèces chimiques pour l'industrie chimique, notamment en méthanol, en éthanol ou propanol, ...

La synthèse de l'éthanol à partir du dioxyde de carbone est, par exemple, réalisée par la mise en œuvre d'un procédé biocatalytique tel qu'un procédé Fischer-Tropsch.

La réaction de reformage du méthane par le dioxyde de carbone a également été largement étudiée en présence de catalyseurs à base de métaux de transition (ruthénium, ...).

Toutefois, ces procédés de l'état de l'art ne sont pas adaptés pour traiter des flux gazeux chargés en dioxyde de carbone émis par des installations industrielles.

Ces derniers comportent, en effet, nombre d'impuretés et de poussières telles que des goudrons et des composés acides, en particulier, dans les flux gazeux provenant de hauts-fourneaux.

Ces procédés ne permettent pas non plus de traiter des volumes gazeux importants.

Or, les rejets gazeux dans l'air de ces installations industrielles, notamment les raffineries, les cimenteries et les usines sidérurgiques, constituent les principales sources de dioxyde de carbone.

En conséquence, il existe un besoin pressant pour un nouveau procédé de transformation du dioxyde de carbone contenu dans un flux gazeux émis par un site industriel, qui permette de surmonter les inconvénients de l'art antérieur exposés ci-dessus. WO 2008/098324 A1 divulgue un procédé de traitement d'un flux gazeux provenant des cheminées d'une installation industrielle et contenant du dioxyde de carbone ainsi qu'au moins un hydrocarbure au moyen d'une torche plasma à arc non transféré de manière à produire du dioxygène et des particules de carbone. WO 2014/038907 A1 décrit quant à lui un procédé de reformage à sec d'un mélange de méthane et de dioxyde de carbone employant une torche plasma à arc.

### Objet de l'invention

La présente invention vise à pallier les inconvénients de l'art antérieur en proposant un procédé de production d'un gaz de synthèse par traitement d'un flux gazeux contenant du CO₂ et un ou plusieurs hydrocarbures, simple dans sa conception et dans son mode opératoire, fiable et économique, capable de réduire le volume de dioxyde de carbone.

Un autre objet de la présente invention est un tel procédé capable d'accepter des flux gazeux présentant de larges fluctuations de qualité et de quantité.

### BREVE DESCRIPTION DE L'INVENTION

A cet effet, l'invention concerne un procédé de production d'un gaz de synthèse par traitement d'un flux gazeux contenant du CO₂ et un ou plusieurs hydrocarbures selon les revendications 1 à 14 ci-jointes.

Selon l'invention, ce procédé comprend les étapes suivantes :
a) fournir un flux gazeux contenant entre 10% et 50% en volume de CO₂ et entre 10% et 50% en volume d'un ou plusieurs hydrocarbures,
b) générer un dard plasma à partir d'une torche plasma à arc non transféré,
c) mélanger ledit flux gazeux avec ledit dard plasma en aval de ladite torche plasma, et
d) propager ledit mélange dans un réacteur allongé pour assurer la conversion dudit flux gazeux en un gaz de synthèse.

Lorsque le volume de CO₂ et d'un ou plusieurs hydrocarbures n'est pas égal à 100% du volume total du flux gazeux, le reste du flux gazeux peut comporter différentes espèces telles que de l'azote, de la vapeur d'eau, de l'hydrogène ou du monoxyde de carbone.

On entend par l'expression « placé en aval de », placé au-delà de, dans la direction de propagation du dard plasma.

Selon un mode de réalisation particulier de ce procédé de production d'un gaz de synthèse, le flux gazeux fourni à l'étape a) contient majoritairement, du CO₂ et un ou plusieurs hydrocarbures.

On entend par l'expression «un flux gazeux contenant, majoritairement, du CO₂ et un ou plusieurs hydrocarbures», un flux gazeux riche d'un ensemble constitué de dioxyde de carbone et d'un ou plusieurs hydrocarbures, c'est-à-dire contenant plus de 30% en volume d'un ensemble constitué de CO₂ et d'un ou plusieurs hydrocarbures, et encore mieux plus 50% en volume de cet ensemble. Le reste du flux gazeux peut comporter différentes espèces telles que de l'azote, de la vapeur d'eau, de l'hydrogène ou du monoxyde de carbone.

Dans le procédé de production d'un gaz de synthèse selon l'invention, à l'étape a), on sépare ledit flux gazeux à traiter en un premier flux gazeux et en un second flux gazeux, puis à l'étape b), on génère un dard plasma à partir d'une torche plasma à arc non transféré en utilisant au moins ledit second flux gazeux comme gaz plasmagène, puis à l'étape c), on mélange ledit premier flux gazeux avec ledit dard plasma en aval de ladite torche plasma et à l'étape d), on propage ledit mélange dans un réacteur allongé pour assurer la conversion dudit premier flux gazeux et dudit dard plasma en un gaz de synthèse.

De manière avantageuse, ledit gaz plasmagène alimentant la torche à plasma est constitué du seul second flux gazeux. Alternativement, ce gaz plasmagène peut comporter ledit second flux gazeux et au moins un autre flux gazeux permettant d'ajuster la composition du gaz plasmagène, tel que de l'air ou un autre flux de gaz de procédé.

De préférence, lorsque ladite torche à plasma est alimentée avec ledit gaz plasmagène pour générer ledit dard plasma, ledit gaz plasmagène est à une température supérieure au point de rosée des hydrocarbures lourds tels que des goudrons, contenus dans ledit second flux gazeux. Ainsi, et de préférence, ledit gaz plasmagène est à une température comprise entre 20°C et 150°C.

Une telle température permet d'éviter un phénomène de condensation des hydrocarbures qui pourrait conduire à l'obstruction de la torche.

Selon encore un autre mode de réalisation de ce procédé de production d'un gaz de synthèse, ladite torche ayant un axe principal, ledit dard ayant un axe de propagation sensiblement colinéaire avec l'axe principal de ladite torche, ladite torche plasma étant montée sur une enceinte d'introduction, on reçoit ledit flux gazeux ou ledit premier flux gazeux à au moins un port d'entrée de ladite enceinte d'introduction, ledit port d'entrée étant placé en aval de ladite torche plasma, et on introduit ledit flux gazeux ou ledit premier flux gazeux de sorte qu'il rencontre au moins partiellement ledit dard plasma pour assurer son mélange avec ledit dard plasma.

Selon encore un autre mode de réalisation de ce procédé de production d'un gaz de synthèse, ledit réacteur allongé est placé en aval de ladite enceinte d'introduction en étant en communication avec cette dernière, ledit réacteur ayant un axe longitudinal sensiblement colinéaire avec l'axe de propagation dudit dard plasma.

Selon encore un autre mode de réalisation de ce procédé de production d'un gaz de synthèse, ledit flux gazeux à traiter est fourni à une température supérieure à la température ambiante.

En d'autres termes, le flux gazeux à traiter pouvant être issu de procédés pétroliers, sidérurgiques ou chimiques, il s'agit d'un gaz chaud, ayant une température inférieure typiquement à 150°C. L'utilisation d'une partie de ce flux gazeux chaud comme gaz plasmagène pour générer un dard plasma avec la torche plasma à arc non transféré, permet alors avantageusement de conserver son apport calorifique. Un tel mode de réalisation permet alors de réduire d'autant les volumes des équipements nécessaires au traitement du flux gazeux et donc d'assurer leur compacité.

Selon encore un autre mode de réalisation de ce procédé de production d'un gaz de synthèse, à l'étape a), ledit flux gazeux étant fourni à une pression supérieure à la pression atmosphérique, le gaz plasmagène alimentant ladite torche plasma à arc non transféré est à une pression d'alimentation Prₐₗᵢₘ permettant de générer un dard plasma au moins égale à la pression de service dudit réacteur.

En d'autres termes, ledit réacteur étant opéré en surpression, ledit dard plasma est généré avec une pression supérieure ou égale à la pression régnant dans ledit réacteur.

Selon encore un autre mode de réalisation de ce procédé de production d'un gaz de synthèse, ledit flux gazeux à traiter comprend entre 10% et 50% en volume de CO₂ et entre 10% et 50% en volume de Méthane (CH₄), de préférence, majoritairement du CO₂ et du Méthane (CH₄).

Selon encore un autre mode de réalisation de ce procédé de production d'un gaz de synthèse, on introduit ledit flux gazeux ou ledit premier flux gazeux selon une direction distincte dudit axe de propagation pour établir une zone de mélange turbulent entre ledit flux gazeux ou premier flux gazeux et le dard plasma.

Selon encore un autre mode de réalisation de ce procédé de production d'un gaz de synthèse, ledit flux gazeux ou ledit premier flux gazeux étant introduit dans une enceinte d'introduction en communication avec ledit réacteur, on introduit dans ladite enceinte d'introduction ou dans ledit réacteur, au moins un fluide pour ajuster la composition du mélange obtenu à l'étape c), tel que de la vapeur d'eau. A titre d'exemple, si de la vapeur d'eau est présente dans le réacteur, du carbone (C) pourra réagir avec l'eau (H₂0) pour produire du monoxyde de carbone et de l'hydrogène libre (H₂).

De préférence, ledit au moins un fluide est introduit par au moins un port d'entrée dudit réacteur ou de ladite enceinte d'introduction.

La présente invention concerne également un procédé de traitement d'un gaz de synthèse obtenu par le procédé de production tel que décrit précédemment. Selon l'invention, le gaz de synthèse issu du réacteur comprenant un mélange de monoxyde de carbone (CO) et d'hydrogène, on convertit ce mélange pour former de l'hydrogène gazeux (H₂) et on stocke ce dernier.

La présente invention concerne également un procédé de traitement d'un gaz de synthèse obtenu par le procédé de production tel que décrit précédemment. Selon l'invention, le gaz de synthèse issu du réacteur comprenant un mélange de monoxyde de carbone (CO) et d'hydrogène, on convertit ce mélange pour former du méthanol.

Grâce à ce traitement, il est possible de supprimer une molécule de CO₂ et de créer deux CH₃OH.

De manière avantageuse, préalablement à cette conversion, on forme un mélange molaire de monoxyde de carbone (CO) et d'hydrogène dans un rapport spécifique de 2 : 1 ou 2,05 : 1 puis on convertit ce mélange pour former exclusivement du méthanol.

La présente invention concerne aussi un procédé de traitement d'un gaz de synthèse obtenu par le procédé de production tel que décrit précédemment. Selon l'invention, le gaz de synthèse issu du réacteur comprenant un mélange de monoxyde de carbone (CO) et d'hydrogène, on convertit ce mélange pour former de l'ammoniac.

La présente invention concerne encore un procédé de production d'un gaz de synthèse par traitement d'un flux gazeux contenant du CO₂ et un ou plusieurs hydrocarbures.

Selon l'invention, ce procédé comprend les étapes suivantes :
a) fournir un flux gazeux contenant, majoritairement, du CO₂ et un ou plusieurs hydrocarbures,
b) générer un dard plasma à partir d'une torche plasma à arc non transféré,
c) mélanger ledit flux gazeux avec ledit dard plasma en aval de ladite torche plasma, et
d) propager ledit mélange dans un réacteur allongé pour assurer la conversion dudit flux gazeux en un gaz de synthèse.

On entend par l'expression «un flux gazeux contenant, majoritairement, du CO₂ et un ou plusieurs hydrocarbures», un flux gazeux riche d'un ensemble constitué de dioxyde de carbone et d'un ou plusieurs hydrocarbures, c'est-à-dire contenant plus de 30% en volume d'un ensemble constitué de CO₂ et d'un ou plusieurs hydrocarbures, et encore mieux plus 50% en volume de cet ensemble. Le reste du flux gazeux peut comporter différentes espèces telles que de l'azote, de la vapeur d'eau, de l'hydrogène ou du monoxyde de carbone.

Selon un mode de réalisation particulier de ce procédé de production d'un gaz de synthèse, à l'étape a), on sépare ledit flux gazeux à traiter en un premier flux gazeux et en un second flux gazeux, puis à l'étape b), on génère un dard plasma à partir d'une torche plasma à arc non transféré en utilisant au moins ledit second flux gazeux comme gaz plasmagène, puis à l'étape c), on mélange ledit premier flux gazeux avec ledit dard plasma en aval de ladite torche plasma et à l'étape d), on propage ledit mélange dans un réacteur allongé pour assurer la conversion dudit premier flux gazeux et dudit dard plasma en un gaz de synthèse.

Selon un autre mode de réalisation particulier de ce procédé de production d'un gaz de synthèse, ledit gaz plasmagène alimentant la torche à plasma est constitué du seul second flux gazeux.

Selon encore un autre mode de réalisation particulier de ce procédé de production d'un gaz de synthèse, lorsque ladite torche à plasma est alimentée avec ledit gaz plasmagène pour générer ledit dard plasma, ledit gaz plasmagène est à une température supérieure au point de rosée des hydrocarbures lourds tels que des goudrons, contenus dans ledit second flux gazeux.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels :
- la Figure 1 représente schématiquement un dispositif de traitement d'un flux gazeux comprenant un ensemble constitué de CO₂ et d'un ou plusieurs hydrocarbures pour produire un gaz de synthèse selon un mode de réalisation particulier de l'invention ;
- la Figure 2 est une représentation schématique des différentes étapes conduisant à la production d'hydrogène à partir d'un flux gazeux contenant du CO₂ et du méthane (CH₄) selon un mode de réalisation de la présente invention ;

### DESCRIPTION DETAILLEE DE MODE DE REALISATION DE L'INVENTION

Tout d'abord, on note que les figures ne sont pas à l'échelle.

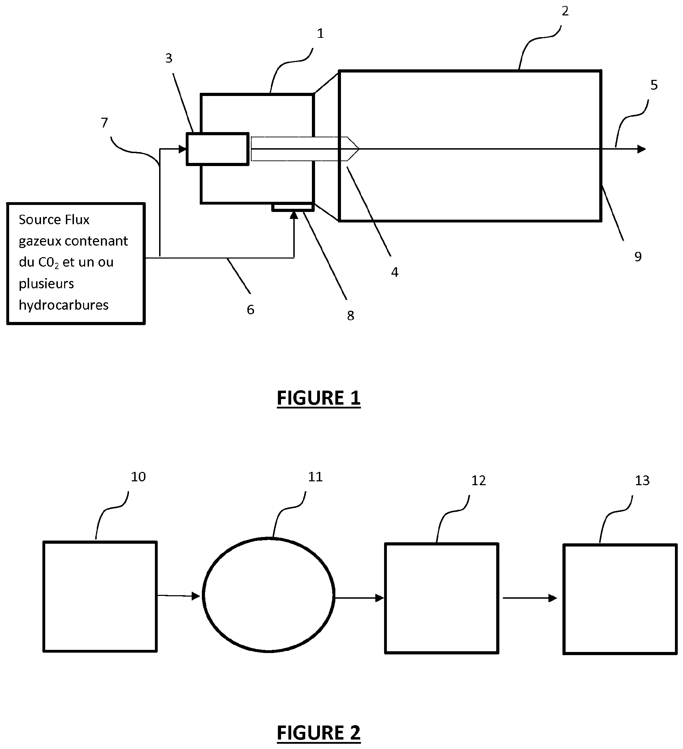

La Figure 1 représente schématiquement un dispositif de traitement d'un flux gazeux industriel comprenant un ensemble constitué de CO₂ et d'un ou plusieurs hydrocarbures pour produire un gaz de synthèse comprenant moins de CO₂ selon un mode de réalisation particulier de l'invention.

Ce dispositif de traitement, qui forme un système en ligne, comporte une enceinte d'introduction 1 du flux gazeux à traiter, à laquelle est relié un réacteur 2.

Cette enceinte d'introduction 1 et le réacteur 2 présentent chacun un volume interne délimité par des parois, ces parois étant recouvertes, côté interne, de matériaux réfractaires à haute tenue en température, par exemple à base de chrome/corindon. Ces matériaux réfractaires permettant notamment de réduire les pertes thermiques.

L'enceinte d'introduction 1 et le réacteur 2 qui sont ici réalisés en matériau métallique, sont refroidis par un circuit externe de fluide sous pression, ce fluide étant par exemple de l'eau déminéralisée. Toutefois, le dispositif est conçu pour ne pas présenter de point froid susceptible de constituer une zone de condensation des particules présentes dans le flux gazeux à traiter.

Cette enceinte d'introduction 1 comporte une torche plasma 3 à arc non transféré. Cette torche 3 est destinée à générer un dard plasma 4 ayant un axe de propagation 5 sensiblement colinéaire avec l'axe principal de la torche 3.

L'utilisation d'une telle torche 3 permet non seulement d'obtenir un dard plasma 4 présentant une température très élevée, typiquement comprise entre 2000 et 5000°C en fonction de la puissance de la torche mise en œuvre, mais assure également une indépendance complète entre le volume interne de l'enceinte d'introduction 1 et la torche plasma 3.

Ici, le flux gazeux industriel à traiter étant préalablement séparé en un premier flux gazeux 6 et en un second flux gazeux 7, le dard plasma 4 est généré à partir de ladite torche 3 en utilisant au moins ce second flux gazeux 7 comme gaz plasmagène.

Cette enceinte d'introduction 1 comprend également un port d'entrée 8 placé en aval de la torche plasma 3 pour l'introduction du premier flux gazeux 6 à proximité du dard plasma 4. Ce port d'entrée 8 est configuré pour assurer l'introduction du premier flux 6 selon une direction distincte de l'axe de propagation 5 du dard plasma 4 pour établir une zone de mélange turbulent entre ce dard plasma et ce premier flux gazeux 6. Cette zone de mélange turbulent permet d'assurer un mélange intime entre le dard plasma 4 et le premier flux 6. Le premier flux gazeux 6 est ici introduit perpendiculairement à l'axe de propagation 5 du dard plasma 4.

L'axe de propagation 5 du dard plasma 4 est orienté de manière à diriger le mélange premier flux gazeux/dard plasma vers le réacteur 2 dans lequel les premier et second flux gazeux seront le siège de réactions conduisant à leur transformation en un gaz de synthèse.

Des injecteurs (non représentés) sont placés sur l'enceinte d'introduction 1 et/ou le réacteur 2 pour introduire un ou plusieurs fluides en vue de compléter le traitement des espèces générées lors du mélange du premier flux gazeux à traiter et du dard plasma. Ces injecteurs peuvent, par exemple, être des buses d'injection d'un gaz tel que de la vapeur d'eau.

Le réacteur 2 présente une forme allongée sensiblement cylindrique et comporte dans sa partie aval un port de sortie 9 du gaz de synthèse. La géométrie cylindrique du réacteur 2 est conçue pour avantageusement limiter la vitesse du mélange premier flux gazeux/dard plasma au niveau de la paroi du réacteur 2, cette vitesse étant induite par la vitesse du dard plasma en sortie de la torche 3 (typiquement de l'ordre de 400 m/s).

L'axe longitudinal de ce réacteur 2 est sensiblement colinéaire avec l'axe de propagation 5 du dard plasma 4 de manière à limiter les contacts entre ce dard plasma 4 et les parois du réacteur 2.

Ce réacteur 2 constitue une zone de transformation thermique ou thermochimique du flux gazeux industriel en vue de sa conversion en gaz de synthèse. La longueur de ce réacteur 2, ou four, est déterminée afin d'optimiser le temps de séjour des matériaux à synthétiser ou à traiter, temps de séjour nécessaire à l'accomplissement des réactions thermochimiques.

La Figure 2 montre de manière schématique les principales étapes conduisant à la formation d'hydrogène par la mise en œuvre du procédé de l'invention.

Le flux gazeux 10 à traiter comportant du dioxyde de carbone (CO₂) et du méthane (CH₄), il est introduit dans le dispositif de de traitement 11 décrit ci-dessus pour générer notamment 2 CO et 2 H2. Une opération de post traitement 12 permet de séparer le monoxyde de carbone et l'hydrogène.

On obtient ainsi la suppression d'un CO₂ et la création de 2H₂ qui sont stockés 13.

## Revendications

1. Procédé de production d'un gaz de synthèse par traitement d'un flux gazeux contenant du CO₂ et un ou plusieurs hydrocarbures, **caractérisé en ce qu'**il comprend les étapes suivantes :
a) fournir un flux gazeux contenant entre 10% et 50% en volume de CO₂ et entre 10% et 50% en volume d'un ou plusieurs hydrocarbures et séparer ledit flux gazeux à traiter en un premier flux gazeux et en un second flux gazeux,
b) générer un dard plasma à partir d'une torche plasma à arc non transféré, en utilisant au moins ledit second flux gazeux comme gaz plasmagène,
c) mélanger ledit premier flux gazeux avec ledit dard plasma en aval de ladite torche plasma, et
d) propager ledit mélange dans un réacteur allongé pour assurer la conversion dudit premier flux gazeux et dudit dard plasma en un gaz de synthèse en un gaz de synthèse.

2. Procédé selon la revendication 1, **caractérisé en ce que** ledit gaz plasmagène alimentant la torche à plasma est constitué du seul second flux gazeux.

3. Procédé selon la revendication 1 ou 2, **caractérisé en ce que** lorsque ladite torche à plasma est alimentée avec ledit gaz plasmagène pour générer ledit dard plasma, ledit gaz plasmagène est à une température supérieure au point de rosée des hydrocarbures lourds tels que des goudrons, contenus dans ledit second flux gazeux.

4. Procédé selon la revendication 3, **caractérisé en ce que** ledit gaz plasmagène est à une température comprise entre 20°C et 150°C.

5. Procédé selon l'une quelconque des revendications 1 à 4, **caractérisé en ce qu'**à l'étape a), ledit flux gazeux étant fourni à une pression supérieure à la pression atmosphérique, le gaz plasmagène alimentant ladite torche plasma à arc non transféré est à une pression d'alimentation Prₐₗᵢₘ permettant de générer un dard plasma au moins égale à la pression de service dudit réacteur.

6. Procédé selon l'une quelconque des revendications 1 à 5, **caractérisé en ce que** ladite torche ayant un axe principal, ledit dard ayant un axe de propagation sensiblement colinéaire avec l'axe principal de ladite torche, ladite torche plasma étant montée sur une enceinte d'introduction, on reçoit ledit flux gazeux ou ledit premier flux gazeux à au moins un port d'entrée de ladite enceinte d'introduction, ledit port d'entrée étant placé en aval de ladite torche plasma, et on introduit ledit flux gazeux ou ledit premier flux gazeux de sorte qu'il rencontre au moins partiellement ledit dard plasma pour assurer son mélange avec ledit dard plasma.

7. Procédé selon l'une quelconque des revendications 1 à 6, **caractérisé en ce qu'**à l'étape a), ledit flux gazeux à traiter est fourni à une température supérieure à la température ambiante.

8. Procédé selon l'une quelconque des revendications 1 à 7, **caractérisé en ce que** ledit flux gazeux à traiter comprend majoritairement du CO₂ et du Méthane (CH₄).

9. Procédé selon l'une quelconque des revendications 1 à 8, **caractérisé en ce qu'**on introduit ledit flux gazeux ou ledit premier flux gazeux selon une direction distincte dudit axe de propagation pour établir une zone de mélange turbulent entre le dard plasma et ledit flux gazeux ou premier flux gazeux.

10. Procédé selon l'une quelconque des revendications 1 à 9, **caractérisé en ce que** ledit flux gazeux ou ledit premier flux gazeux étant introduit dans une enceinte d'introduction en communication avec ledit réacteur, on introduit dans ladite enceinte d'introduction ou dans ledit réacteur, au moins un fluide pour ajuster la composition du mélange obtenu à l'étape c), tel que de la vapeur d'eau.

11. Procédé de traitement d'un gaz de synthèse obtenu selon l'une quelconque des revendications 1 à 10, **caractérisé en ce que** le gaz de synthèse issu du réacteur comprenant un mélange de monoxyde de carbone (CO) et d'hydrogène, on convertit ce mélange pour former de l'hydrogène gazeux (H₂) et on stocke ce dernier.

12. Procédé de traitement d'un gaz de synthèse obtenu selon l'une quelconque des revendications 1 à 10, **caractérisé en ce que** le gaz de synthèse issu du réacteur comprenant un mélange de monoxyde de carbone (CO) et d'hydrogène, on convertit ce mélange pour former du méthanol.

13. Procédé selon la revendication 12, caractérisé que préalablement à cette conversion on forme un mélange molaire de monoxyde de carbone (CO) et d'hydrogène dans un rapport spécifique de 2 : 1 ou 2,05: 1 puis on convertit ce mélange pour former exclusivement du méthanol.

14. Procédé de traitement d'un gaz de synthèse obtenu selon l'une quelconque des revendications 1 à 10, **caractérisé en ce que** le gaz de synthèse issu du réacteur comprenant un mélange de monoxyde de carbone (CO) et d'hydrogène, on convertit ce mélange pour former de l'ammoniac.

## Patentansprüche

1. Verfahren zur Herstellung eines Synthesegases durch Behandlung eines CO₂ und einen oder mehrere Kohlenwasserstoffe enthaltenden Gasstroms, **dadurch gekennzeichnet, dass** es die folgenden Schritte umfasst:
a) Bereitstellen eines Gasstroms, der zwischen 10 Vol.-% und 50 Vol.-% CO₂ und zwischen 10 Vol.-% und 50 Vol.-% eines oder mehrerer Kohlenwasserstoffe enthält, und Trennen des zu behandelnden Gasstroms in einen ersten Gasstrom und einen zweiten Gasstrom,
b) Erzeugen eines Plasmastrahls aus einem Plasmabrenner mit nicht übertragenem Lichtbogen unter Verwendung wenigstens des zweiten Gasstroms als Plasmagas,
c) Mischen des ersten Gasstroms mit dem Plasmastrahl stromabwärts des Plasmabrenners, und
d) Weiterleiten des Gemisches in einen langgestreckten Reaktor, um die Umwandlung des ersten Gasstroms und des Plasmastrahls in ein Synthesegas zu gewährleisten.

2. Verfahren nach Anspruch 1, **dadurch gekennzeichnet, dass** das den Plasmabrenner speisende Plasmagas ausschließlich aus dem zweiten Gasstrom besteht.

3. Verfahren nach Anspruch 1 oder 2, **dadurch gekennzeichnet, dass**, wenn der Plasmabrenner mit dem Plasmagas zur Erzeugung des Plasmastrahls gespeist wird, das Plasmagas eine Temperatur aufweist, die über dem Taupunkt der schweren Kohlenwasserstoffe, wie der in dem zweiten Gasstrom enthaltenen Teere, liegt.

4. Verfahren nach Anspruch 3, **dadurch gekennzeichnet, dass** das Plasmagas eine Temperatur zwischen 20 °C und 150 °C aufweist.

5. Verfahren nach einem der Ansprüche 1 bis 4, **dadurch gekennzeichnet, dass** in Schritt a) der Gasstrom mit einem Druck über dem atmosphärischen Druck zugeführt wird, das Plasmagas, das den Plasmabrenner mit nicht übertragenem Lichtbogen speist, einen Zufuhrdruck Prₐₗᵢₘ aufweist, der die Erzeugung eines Plasmastrahles ermöglicht, der wenigstens dem Betriebsdruck des Reaktors entspricht.

6. Verfahren nach einem der Ansprüche 1 bis 5, **dadurch gekennzeichnet, dass** der Brenner eine Hauptachse aufweist, der Strahl eine Ausbreitungsachse aufweist, die im Wesentlichen kolinear zur Hauptachse des Brenners ist, der Plasmabrenner an einem Einführungsgehäuse angebracht ist, der Gasstrom oder der erste Gasstrom an wenigstens einer Einlassöffnung des Einlassgehäuses aufgenommen wird, wobei die Einlassöffnung stromabwärts von der Plasmabrenner angeordnet ist, und der Gasstrom oder der erste Gasstrom so eingeleitet wird, dass er wenigstens teilweise auf den Plasmastrahl trifft, um seine Vermischung mit dem Plasmastrahl sicherzustellen.

7. Verfahren nach einem der Ansprüche 1 bis 6, **dadurch gekennzeichnet, dass** in Schritt a) der zu behandelnde Gasstrom mit einer Temperatur oberhalb der Umgebungstemperatur zugeführt wird.

8. Verfahren nach einem der Ansprüche 1 bis 7, **dadurch gekennzeichnet, dass** der zu behandelnde Gasstrom überwiegend CO₂ und Methan (CH₄) umfasst.

9. Verfahren nach einem der Ansprüche 1 bis 8, **dadurch gekennzeichnet, dass** der Gasstrom oder der erste Gasstrom in einer von der Ausbreitungsachse unterschiedlichen Richtung eingeführt wird, um eine turbulente Mischzone zwischen dem Plasmastrahl und dem Gasstrom oder dem ersten Gasstrom zu erzeugen.

10. Verfahren nach einem der Ansprüche 1 bis 9, **dadurch gekennzeichnet, dass** der Gasstrom oder der erste Gasstrom in eine mit dem Reaktor in Verbindung stehende Einführungskammer eingeführt wird und in den Einführungsraum oder in den Reaktor wenigstens ein Fluid eingeführt wird, um die Zusammensetzung des in Schritt c) erhaltenen Gemisches anzupassen, beispielsweise Wasserdampf.

11. Verfahren zur Behandlung eines Synthesegases, das nach einem der Ansprüche 1 bis 10 erhalten wurde, **dadurch gekennzeichnet, dass** das aus dem Reaktor austretende Synthesegas, das ein Gemisch aus Kohlenmonoxid (CO) und Wasserstoff enthält, in Wasserstoffgas (H₂) umgewandelt und dieses gespeichert wird.

12. Verfahren zur Behandlung eines Synthesegases, das nach einem der Ansprüche 1 bis 10 erhalten wurde, **dadurch gekennzeichnet, dass** das aus dem Reaktor austretende Synthesegas, das ein Gemisch aus Kohlenmonoxid (CO) und Wasserstoff enthält, in Methanol umgewandelt wird.

13. Verfahren nach Anspruch 12, **dadurch gekennzeichnet, dass** vor dieser Umwandlung ein molares Gemisch aus Kohlenmonoxid (CO) und Wasserstoff in einem spezifischen Verhältnis von 2:1 oder 2,05:1 gebildet wird und dieses Gemisch anschließend ausschließlich zu Methanol umgewandelt wird.

14. Verfahren zur Behandlung eines Synthesegases, das nach einem der Ansprüche 1 bis 10 erhalten wurde, **dadurch gekennzeichnet, dass** das aus dem Reaktor austretende Synthesegas, das ein Gemisch aus Kohlenmonoxid (CO) und Wasserstoff enthält, in Ammoniak umgewandelt wird.

## Claims

1. Method for producing a synthesis gas by treating a gas stream containing CO₂ and one or more hydrocarbons, **characterised in that** it comprises the following steps:
a) supplying a gas stream containing between 10% and 50% by volume of CO₂ and between 10% and 50% by volume of one or more hydrocarbons and separating said gas stream to be treated into a first gas stream and a second gas stream,
b) generating a plasma cone from a non-transferred arc plasma torch, using at least said second gas stream as plasmagen gas,
c) mixing said first gas stream with said plasma cone downstream of said plasma torch, and
d) propagating said mixture in an elongated reactor to ensure the conversion of said first gas stream and said plasma cone into a synthesis gas.

2. Method according to claim 1, **characterised in that** said plasmagen gas supplying the plasma torch consists of only the second gas stream.

3. Method according to claim 1 or 2, **characterised in that** when said plasma torch is supplied with said plasmagen gas to generate said plasma cone, said plasmagen gas is at a temperature above the dew point of heavy hydrocarbons, such as tars, contained in said second gas stream.

4. Method according to claim 3, **characterised in that** said plasmagen gas is at a temperature of between 20°C and 150°C.

5. Method according to any one of claims 1 to 4, **characterised in that** in step a), said gas stream is supplied at a pressure greater than atmospheric pressure, the plasmagen gas supplying said non-transferred arc plasma torch is at a supply pressure Prₐₗᵢₘ allowing a plasma cone to be generated that is at least equal to the operating pressure of said reactor.

6. Method according to any one of claims 1 to 5, **characterised in that** said torch has a main axis, said cone having a propagation axis that is substantially collinear to the main axis of said torch, said plasma torch being mounted on an introduction chamber, said gas stream or said first gas stream is received at at least one inlet port of said introduction chamber, said inlet port being located downstream of said plasma torch, and said gas stream or said first gas stream is introduced such that it at least partially meets said plasma cone to ensure it mixes with said plasma cone.

7. Method according to any one of claims 1 to 6, **characterised in that** in step a), said gas stream to be treated is supplied at a temperature that is above the ambient temperature.

8. Method according to any one of claims 1 to 7, **characterised in that** said gas stream to be treated comprises mainly CO₂ and methane (CH₄).

9. Method according to any one of claims 1 to 8, **characterised in that** said gas stream or said first gas stream is introduced in a direction distinct from said propagation axis to establish a turbulent mixing zone between the plasma cone and said gas stream or first gas stream.

10. Method according to any one of claims 1 to 9, **characterised in that** said gas stream or said first gas stream is introduced into an introduction chamber in communication with said reactor, at least one fluid is introduced into said introduction chamber or into said reactor to adjust the composition of the mixture obtained in step c), such as water vapour.

11. Method for treating a synthesis gas obtained according to any one of claims 1 to 10, **characterised in that** the synthesis gas from the reactor comprises a mixture of carbon monoxide (CO) and hydrogen, this mixture is converted to form hydrogen gas (H₂) and the latter is stored.

12. Method for treating a synthesis gas obtained according to any one of claims 1 to 10, **characterised in that** the synthesis gas from the reactor comprises a mixture of carbon monoxide (CO) and hydrogen, this mixture is converted to form methanol.

13. Method according to claim 12, **characterised in that** prior to this conversion a molar mixture of carbon monoxide (CO) and hydrogen is formed in a specific ratio of 2: 1 or 2.05: 1 , then this mixture is converted to form exclusively methanol.

14. Method for treating a synthesis gas obtained according to any one of claims 1 to 10, **characterised in that** the synthesis gas from the reactor comprises a mixture of carbon monoxide (CO) and hydrogen, this mixture is converted to form ammonia.
